# EUROPÄISCHE PATENTSCHRIFT

(11) **EP 2 744 019 B1**
(45) Veröffentlichungstag und Bekanntmachung des Hinweises auf die Patenterteilung: **23.11.2016**
(21) Anmeldenummer: 12197335.8
(22) Anmeldetag: 14.12.2012
(51) Int. Cl.: H01M 4/04, H01M 4/139, H01M 4/62, H01M 4/485, H01M 4/505, H01M 4/525, H01M 4/587

(54) **Verfahren zum Herstellen eines Beschichtungsmaterials zum Beschichten von Elektrodenträgern und Beschichtungsmaterial in Granulatform**
Method for producing a coating material for the coating of electrode carriers and coating material in the form of granules
Procédé de fabrication d'un matériau de revêtement destiné à revêtir des supports d'électrode et matériau de revêtement sous forme de granulé

(43) Veröffentlichungstag der Anmeldung: 18.06.2014
(73) Patentinhaber: Taranis GmbH, 99734 Nordhausen (DE)
(72) Erfinder: Theuerkauf, Stefan Matthias Winfried, 99734 Nordhausen (DE)
(74) Vertreter: Zenz Patentanwälte Partnerschaft mbB

(56) Entgegenhaltungen:
- EP-A1- 0 730 316
- US-A- 6 143 216
- US-A1- 2009 214 949

## Beschreibung

Die vorliegende Erfindung betrifft ein Verfahren zum Herstellen eines Beschichtungsmaterials zum Beschichten eines Elektrodenträgers eines elektrischen Energiespeichers, ein thermoplastisches Granulat zum Beschichten eines entsprechenden Elektrodenträgers sowie ein Verfahren zum Beschichten eines Elektrodenträgers.

Die effektive Speicherung elektrischer Energie ist ein wesentlicher Punkt zukünftiger Energiepolitik und wichtiger Bestandteil von Konzepten zum Umwelt- und Ressourcenschutz. Eine wichtige Stellung nehmen in dieser Beziehung Lithium-Ionen-Batterien, -Akkumulatoren und -Kondensatoren ein. Sie sind insbesondere unter dem Gesichtspunkt der Elektromobilität und für die temporäre Speicherung von beispielsweise aus Windkraft gewonnener Energie von zentraler Bedeutung.

Für die Herstellung von Lithium-Ionen-Batterien, -Akkumulatoren oder -Kondensatoren wird auf einen Elektrodenträger eine aktive Schicht aufgetragen. Diese aktive Schicht umfasst Aktivmaterial, Leitfähigkeitszusätze und ein Bindemittel, wobei die vorgenannten Materialien in einem Lösungsmittel gelöst oder dispergiert werden.

Wird beispielsweise bei der Herstellung der aktiven Schicht ein organisches Lösungsmittel verwendet, verhält es sich in der Regel so, dass sich das Bindemittel vollständig in dem Lösungsmittel löst. Als organische Lösungsmittel für die Beschichtung eines Elektrodenträgers zur Herstellung von Elektroden eines elektrischen Energiespeichers haben sich N-Methyl-Pyrrolidon (NMP) bzw. N-Ethyl-Pyrrolidon (NEP) bewährt. In diesen Lösungsmitteln lösen sich die üblicherweise verwendeten Binder bei Raumtemperatur unter Einbringung von mechanischer Energie, wobei der Lösungsvorgang mehrere Stunden in Anspruch nimmt. Als Binder werden üblicherweise flourhaltige Polymere verwendet, wie beispielsweise Polyvinylidenfluorid-Homopolymer (PVDF) und Polyvinylidenfluorid-Copolymer (PVDF-Copolymer), sowie beliebige Mischungen daraus.

Ein Problem bei der Verwendung der vorgenannten Lösungsmittel bei der Herstellung des Aktivmaterials bzw. des Beschichtungsmaterials ist es, dass sich die Viskosität mit der Zeit ändert und ohne die ständige Einbringung mechanischer Energie die Gefahr besteht, dass sich schwerere Partikel absetzen. Ein weiteres Problem insbesondere bei der Verwendung von NMP ist, dass dieses als giftig eingestuft ist. Auch die Verwendung von NEP ist kritisch, da auch dieses, insbesondere bei oraler Aufnahme, gesundheitsschädlich ist. Aus Arbeits-, Sicherheits- und Umweltschutzgründen ist es daher wünschenswert, die vorgenannten Lösungsmittel durch Verträglichere zu ersetzen.

Ein weiterer Nachteil der vorgenannten Lösungsmittel ist es, dass bei der Herstellung des Beschichtungsmaterials, in Bezug auf das Aktivmaterial, die Leitfähigkeitszusätze sowie den Binder, relativ große Mengen der Lösungsmittel verwendet werden müssen. Da diese Lösungsmittel die Zellchemie des späteren Energiespeichers negativ beeinflussen, müssen diese nach dem Aufbringen des Beschichtungsmaterials auf den Elektrodenträger entfernt werden, was insbesondere im Hinblick auf die hohen Siedetemperaturen der vorgenannten Lösungsmittel zeitaufwendig, energie- und kostenintensiv ist.

Ein weiterer Nachteil der bekannten Beschichtungsmaterialien ist es, dass diese aufgrund der verwendeten Edukte stets viskos sind und somit nur ausgesprochen schwer verpackt, transportiert und anschließend weiterverarbeitet werden kann.

Es ist Aufgabe der vorliegenden Erfindung, ein Verfahren zum Herstellen eines gut lagerbaren Beschichtungsmaterials und ein lagerbares Beschichtungsmaterial als solches bereitzustellen.

Diese Aufgabe wird erfindungsgemäß gelöst durch ein Verfahren gemäß Patentanspruch 1. Bei dem erfindungsgemäßen Verfahren zum Herstellen eines Beschichtungsmaterials zum Beschichten eines Elektrodenträgers eines elektrischen Energiespeichers wird zunächst eine Trockenmischung, enthaltend zumindest Aktivmaterial, einen Leitfähigkeitszusatz sowie fluorhaltigen Polymerbinder bereitgestellt, wobei der fluorhaltige Polymerbinder ausgewählt ist aus einer Gruppe umfassend Polyvinylidenfluorid (PVDF), ein Polyvinylidenfluorid-Copolymer (PVDF-Copolymer) oder eine Mischung aus PVDF und einem PVDF-Copolymer. Bei dem Aktivmaterial kann es sich lediglich um einen Stoff handeln, das Aktivmaterial als solches kann aber auch eine Stoffmischung sein. Gleiches gilt für den Leitfähigkeitszusatz sowie den fluorhaltigen Polymerbinder. Die Trockenmischung wird in Kontakt gebracht mit einem Lösungsmittelgemisch, welches zumindest 60 Gew-% Ethylencarbonat (EC) und/oder Propylencarbonat (PC) umfasst, d.h. das Lösungsmittelgemisch weist zumindest 60 Gew-% Ethylencarbonat oder 60 Gew-% Propylencarbonat oder 60 Gew-% einer beliebigen Mischung aus Ethylencarbonat und Propylencarbonat auf. Vorzugsweise weist das Lösungsmittelgemisch 80 Gew-% Ethylencarbonat oder 80 Gew-% Propylencarbonat oder 80 Gew-% einer beliebigen Mischung aus Ethylencarbonat und Propylencarbonat auf. Insbesondere ist ein Lösungsmittelgemisch mit 100% Ethylencarbonat und/oder Propylencarbonat oder einer beliebigen Mischung bevorzugt, da das Lösen des Polymerbinders in dem Lösungsmittelgemisch durch einen hohen Anteil Ethylencarbonat und/oder Propylencarbonat beschleunigt wird.

Beispielsweise kann in die Trockenmischung nach deren Herstellung das Lösungsmittelgemisch eindosiert werden, es ist jedoch auch vorstellbar, dass das Lösungsmittelgemisch beispielsweise in die vorbereitete Trockenmischung eingedüst wird.

Die Trockenmischung und das Lösungsmittelgemisch werden bei einer Temperatur von 80°C oder höher bis zum vollständigen Lösen des fluorhaltigen Polymerverbinders in dem Lösungsmittelgemisch durchmischt. Dabei ist es unerheblich, ob die Temperatur von 80°C oder höher erst nach der Zusammenführung der Trockenmischung und des Lösungsmittelgemisches eingestellt wird, oder ob beide Materialien schon bei Temperaturen von 80°C oder höher zusammengegeben werden. In diesem Zusammenhang sei noch angemerkt, dass sich die 80°C auf ein bei Normaldruck durchgeführtes Verfahren beziehen.

Erfindungsgemäß liegen der fluorhaltige Polymerbinder und das Lösungsmittelgemisch in einem Verhältnis von 1:(5-30) vorliegen, und die erhaltene Mischung wird nach dem vollständigen Lösen des fluorhaltigen Polymerbinders auf eine Temperatur von unter 40°C gekühlt wird, wobei die erhaltene Mischung bei dem Abkühlvorgang aushärtet. Die erhaltene Mischung wird bei dem oder nach dem Aushärtevorgang granuliert.

Mit dem erfindungsgemäßen Verfahren kann also ein festes Beschichtungsmaterial erhalten werden, wobei die überraschende Verfestigung u.a. wohl auf das Auskristallisieren des Polymerbinders in dem Lösungsmittelgemisch zurückzuführen ist. Das erhaltene Granulat kann ohne größeren Aufwand verpackt und transportiert werden. "Vor Ort" kann das thermoplastische Beschichtungsmaterial dann wieder aufgeschmolzen werden und zum Beschichten von Elektrodenträgern (zum Herstellen von Elektroden) für elektrische Energiespeicher genutzt werden.

Wesentlich für die Herstellung des Beschichtungsmaterials ist zum einen die Verwendung des oben genannten Lösungsmittel(gemisches) und das Verhältnis zwischen fluorhaltigem Polymerbinder und Lösungsmittel(gemisch) - nur wenn die Mischung und das Verhältnis erfindungsgemäß sind kann ein sich verfestigendes Beschichtungsmaterial erhalten werden.

Das erfindungsgemäße Verfahren vereint eine Vielzahl von Vorteilen in sich. Wie bereits erwähnt ist das Verfahren aufgrund der Verwendung eines Lösungsmittelgemisches mit Ethylencarbonat und/oder Propylencarbonat aus Arbeits-, Sicherheits- und Umweltschutzgründen unbedenklicher. Ferner ist es kostengünstiger, da zum Lösen bzw. Dispergieren der gleichen Menge an Trockenmischung, verglichen mit NMP oder NEP als Lösungsmittel, eine geringere Lösungsmittelmenge notwendig ist. Dies bedingt bei der Weiterverarbeitung wiederrum, dass aufgrund der geringeren Lösungsmittelmenge ein kürzerer Trockenofen notwendig ist. Ein weiterer Vorteil des erfindungsgemäßen Verfahren ist es, dass die Lösungsmittel EC / PC die Zellchemie des späteren Energiespeichers nicht stören - EC wird beispielsweise häufig als Bestandteil des Elektrolyten eingesetzt.

Ein weiterer Vorteil des erfindungsgemäßen Verfahren ist es, dass sich der fluorhaltige Polymerbinder rascher in dem Lösungsmittelgemisch löst als dies bei einem Verfahren basierend auf NMP oder NEP der Fall ist; das Beschichtungsmaterial ist erfindungsgemäß somit rascher (und damit auch kostengünstiger) herzustellen. Aufgrund der sicherheitstechnischen Unbedenklichkeit der verwendeten Lösungsmittel ist auch der Aufwand bei der Reinigung der zur Herstellung des Beschichtungsmaterials verwendeten Gerätschaften geringer.

Bei der Verwendung eines Lösungsmittelgemisches mit einem hohen Anteil Propylencarbonat kann das erhaltene Granulat unter gewissen Umständen ein wenig Lösungsmittel "ausschwitzen". Um ein Verkleben des Granulats zu verhindern ist es bei einer Ausführungsform des Verfahrens vorgesehen, dass nach dem Granulieren dem erhaltenen Granulat bis zu 1 Gew-% MgO oder Al₂O₃ oder eine Mischung daraus zugesetzt wird.

Der fluorhaltige Polymerbinder sorgt für eine gute Haftung des Beschichtungsmaterials an dem Elektrodenträger und innerhalb der Beschichtung selber. Bevorzugt sind insbesondere PVDF-Hexafluoropropylen (PVDF-HFP), PVDF-Tetrafluorethylen (PVDF-TFE) oder PVDF-Chlorotetrafluoroethylen (PVDF-CTFE) oder Mischungen daraus.

Unter "Aktivmaterial" wird vom Fachmann allgemein ein Material bzw. eine Materialmischung verstanden, welche(s) die reversible Ein- und Auslagerung elektrisch geladener Teilchen ermöglicht. Im fertiggestellten und funktionsbereiten elektrischen Energiespeicher kann dann während des Einlagerungs- bzw. Auslagerungsvorgangs der elektrisch geladenen Teilchen je nach Aufbau des Speichers ein Lade- oder Entladestrom fließen. Im Falle einer Lithium-Ionen-Batterie handelt es sich bei den elektrisch geladenen Teilchen um Lithium-Ionen. Die Einlagerungs- und Auslagerungsvorgänge finden beim Laden bzw. Entladen jeweils an der Kathode und an der Anode statt. Für die Herstellung von Anode und Kathode werden verschiedene Aktivmaterialien verwendet. Bei dem erfindungsgemäßen Verfahren ist das Aktivmaterial vorzugsweise ausgewählt aus einer Gruppe umfassend Graphit, amorphe Kohlenstoffe (wie Hard Carbon, Soft Carbon, Carbon Nano Tubes (CNT), Aktivkohle, Anthrazite), Lithium-Speichermetalle- und/oder -legierungen (wie z.B. nanokristallines und/oder amorphes Silizium, Silizium-Kohlenstoff-Komposite, Zinn, Aluminium, Antimon), Li4Ti5O12 (LTO), Lithiummetalloxide vom Typ LiMxMyMzOa (M ausgewählt aus Co,Ni,Mn,Al,V; 0≤x≤0,85, 0≤y≤0,5, 0≤z≤0,1; 1≤a≤4) oder Lithiummetallphospahte LiMPO4 (z.B. LiFePO4, LiMnFePO4, LiCoPO4,LiVPO4) und Dotierungen der vorgenannten Lithiummetalloxide und Lithiummetallphosphate mit Magnesium und Niob, Siliziumcarbide, Magnesiumoxide, Titanoxide, Aluminiumoxide, Zirkonoxide, Calciumcarbide, sowie Füllstoffe ausgewählt aus der Gruppe umfassend NaCl, KCl, LiBF4, LiClO4, LiBOB, LiPF6) mit einem Kornspektrumsbereich zwischen 0,01≤x ≤35µm oder Mischungen dieser Füllstoffe.

Der Leitfähigkeitszusatz ist vorzugsweise ausgewählt aus einer Gruppe umfassend Graphit mit d50 zwischen 1 µm und 8 µm, Ruße mit Primärpartikeln zwischen 10 und 80 nm und Kohlenstofffasern oder beliebige Mischungen davon. Die Aufgabe des Leitfähigkeitszusatzes ist es, die elektrische Leitfähigkeit der Beschichtung und so die elektrochemische Reaktion, also das Ein- und Auslagern, der elektrisch geladenen Teilchen zu verbessern.

Als Material für den Elektrodenträger sind Aluminiumfolien für die Kathodenelektrode und Kupferfolien für die Anodenelektrode bevorzugt. Je nach Wahl des Aktivmaterials auf der Anodenelektrode und dem daraus resultierenden Spannungswert gegenüber Lithium sind auch Aluminiumfolien oder Nickelfolien für die Anodenelektroden einsetzbar.

Die Trockenmischung selber weist vorzugsweise 80-95 Gew-% Aktivmaterial, 1,5-5 Gew-% Leitfähigkeitszusatz und 2-8 Gew-% fluorhaltigen Polymerbinder auf. Eine besonders bevorzugte Trockenmischung zur Herstellung eines Beschichtungsmaterials für die Anode umfasst 94 Gew-% Aktivmaterial, 2 Gew-% Leitfähigkeitszusatz und 4 Gew-% Polymerbinder. Eine besonders bevorzugte Trockenmischung zur Herstellung eines Beschichtungsmaterials für die Kathode umfasst 93 Gew-% Aktivmaterial, 3 Gew-% Leitfähigkeitszusatz und 4 Gew-% Polymerbinder.

Die erfindungsgemäße Aufgabe wird ferner gelöst durch ein thermoplastisches Granulat zum Beschichten eines Elektrodenträgers eines elektrischen Energiespeichers, umfassend zumindest i) Aktivmaterial, ii) einen Leitfähigkeitszusatz, iii) fluorhaltigen Polymerbinder, wobei der fluorhaltige Polymerbinder ausgewählt ist aus einer Gruppe umfassend Polyvinylidenfluorid (PVDF), ein Polyvinylidenfluorid-Copolymer (PVDF-Copolymer) oder eine beliebige Mischung aus PVDF und/oder zumindest einem PVDF-Copolymer, und iv) ein Lösungsmittelgemisch. Erfindungsgemäß weist das Lösungsmittelgemisch 60 Gew-% Ethylencarbonat und/oder Propylencarbonat, d.h. die Lösungsmittelmischung weist zumindest 60 Gew-% Ethylencarbonat oder 60 Gew-% Propylencarbonat oder 60 Gew-% einer beliebigen Mischung aus Ethylencarbonat und Propylencarbonat auf. Vorzugsweise weist das Lösungsmittelgemisch 80 Gew-% Ethylencarbonat oder 80 Gew-% Propylencarbonat oder 80 Gew-% einer beliebigen Mischung aus Ethylencarbonat und Propylencarbonat auf. Insbesondere ist ein Lösungsmittelgemisch mit 100% Ethylencarbonat und/oder Propylencarbonat oder einer beliebigen Mischung bevorzugt, da das Lösen des Polymerbinders in dem Lösungsmittelgemisch durch einen hohen Anteil Ethylencarbonat und/oder Propylencarbonat beschleunigt wird.

Erfindungsgemäß liegen der fluorhaltige Polymerbinder und das Lösungsmittelgemisch in einem Gewichtsverhältnis zwischen 1: (5-30) vor.

Bedingt durch die Verwendung des erfindungsgemäßen Lösungsmittelgemisches und die Einstellung der Menge des Polymerbinders in Bezug auf das Lösungsmittelgemisch ist ein Beschichtungsmaterial in Granulatform erzielbar. Dieses kann ohne großen Aufwand verpackt und transportiert werden, man ist also nicht mehr darauf angewiesen, dass Beschichtungsmaterial direkt "vor Ort" herzustellen. Darüber hinaus ist das Granulat auch über einen längeren Zeitraum lagerfähig, seine Zusammensetzung ändert sich aufgrund der Granulatform nicht. Bekannte Beschichtungsmassen auf Basis von NMP / NEP sind nach Fertigstellung stets viskos und um ein Absetzen schwerer Teilchen zu verhindern ist ein stetiger Energieeintrag notwendig. Das Handling des erfindungsgemäßen thermoplastischen Materials ist wesentlich unkomplizierter und aufgrund des Ersetzen der gesundheitsschädlichen Lösungsmittel NMP / NEP ist der Reinigungsaufwand nach Herstellung des Granulats wesentlich geringer. Aufgrund der geringeren Menge Lösungsmittel (bezogen auf den Polymerbinder) kann die Trocknstrecke zum Entfernen des Lösungsmittelgemisches nach Aufbringen auf einen Elektrodenträger kürzer ausfallen oder die Geschwindigkeit bei gegebener Trocknerstrecke erhöht werden, was wiederrum die Kosten für die Herstellung der Elektroden vermindert.

Das Aktivmaterial ist vorzugsweise ausgewählt aus einer Gruppe umfassend Graphit, amorphe Kohlenstoffe (wie Hard Carbon, Soft Carbon, Carbon Nano Tubes (CNT), Aktivkohle, Anthrazite), Lithium-Speichermetalle- und/oder -legierungen (wie z.B. nanokristallines und/oder amorphes Silizium, Silizium-Kohlenstoff-Komposite, Zinn, Aluminium, Antimon), Li₄Ti₅O₁₂ (LTO), Lithiummetalloxide vom Typ LiMₓM_{y}M_{z}Oₐ (M ausgewählt aus Co, Ni, Mn, Al, V; 0≤x≤0,85, 0≤y≤0,5, 0≤z≤0,1; 1≤a≤4) oder Lithiummetallphosphate LiMPO₄ (z.B. LiFePO₄, LiMnFePO₄, LiCoPO₄,LiVPO₄) und Dotierungen der vorgenannten Lithiummetalloxide und Lithiummetallphosphate mit Magnesium und Niob, Siliziumcarbide, Magnesiumoxide, Titanoxide, Aluminiumoxide, Zirkonoxide, Calciumcarbide, sowie Füllstoffe ausgewählt aus der Gruppe umfassend NaCl, KCl, LiBF₄, LiClO₄, LiBOB, LiPF₆) mit einem Kornspektrumsbereich zwischen 0,01≤x ≤35µm oder Mischungen dieser Füllstoffe. Der Leitfähigkeitszusatz ist vorzugsweise ausgewählt ist aus einer Gruppe umfassend Graphit mit d50 zwischen 1 µm und 8 µm, Ruße mit Primärpartikeln zwischen 10 und 80 nm und Kohlenstofffasern oder beliebige Mischungen davon. Die Trockenmischung weist vorzugsweise 80-95 Gew-% Aktivmaterial, 1,5-5 Gew-% Leitfähigkeitszusatz und 2-8 Gew-% fluorhaltiger Polymerbinder auf.

Die Erfindung betrifft ferner ein Verfahren zum Beschichten eines Elektrodenträgers eines elektrischen Energiespeichers, aufweisend die Schritte Herstellen eines Beschichtungsmaterials und Erwärmen des Beschichtungsmaterials auf eine vorgegebene Beschichtungstemperatur, Beschichten des Elektrodenträgers mit dem Beschichtungsmaterial, und Trocknen des beschichteten Elektrodenträgers, wobei das Verfahren die Schritte zum Herstellen des Beschichtungsmaterials gemäß dem erfindungsgemäßen Verfahrens zum Herstellen einer Beschichtungsmaterials nach einem der Ansprüche 1 - 9 umfasst.

Der nachfolgenden Tabelle ist zu entnehmen, dass die Auflösezeiten verschiedener Polymerbinder in Ethylencarbonat und Propylencarbonat deutlich beschleunigt sind im Vergleich zu NEP, welches gemäß dem Stand der Technik bei der Herstellung von Beschichtungsmaterialen für das Beschichten von Elektrodenträger von elektrischen Energiespeichern verwendet wird.

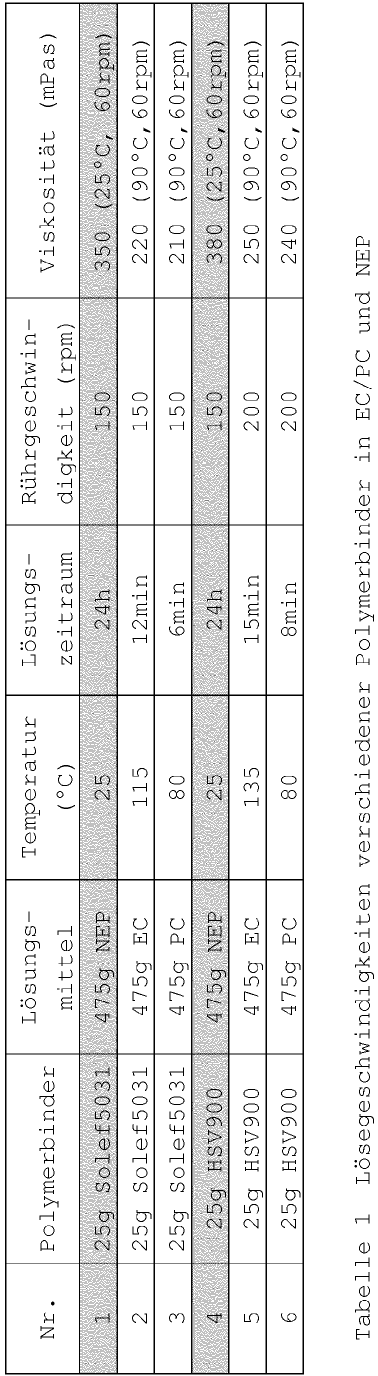

### Beispiele

### Herstellung thermoplastisches Granulat

Variante 1: Herstellung thermoplastisches Granulat mittels Doppel-Wellen-Kneter bei Verwendung von PVDF (Kynar®HSV900) als Polymerbinder und einem Lösungsmittelgemisch mit Ethylencarbonat (EC) und Propylencarbonat (PC) (90 Gew-% EC und 10 Gew-% PC).
a.) Mischen aller pulverförmigen Anteile der Rezeptur (Aktivmaterial -NMC- 93wt%, Leitzusatz - Timkal®SuperP und Timkal® KS4 2:3- 2,5wt% und Polymer -Kynar®HSV900- 4,5wt%) in einem Vakuum-Mischtrockner bei Temperaturen zwischen 80 und 150°C und einem Druck <10mbar zwischen 60 bis 400min, bevorzugt 120min. Danach Abkühlung der Trockenmischung (Dry Blend) auf <40°C und Abfüllen in geeignetes Containment oder direkte gravimetrische Zuführung zum Doppel-Wellen-Kneter. Bei der direkten Zuführung ist einen Abkühlung des Dry Blend nicht zwingend erforderlich. Die Abkühlung auf <40°C soll verhindern, das beim weiteren Abkühlen der Trockenmischung (Dry Blend) ein Vakuum in den Containments entsteht, welches diese ggf. zerstören könnte.
b.) Gravimetrische Zugabe der Trockenmischung (Dry Blend) in einen Doppel-Wellen-Kreter und gravimetrische Zugabe des zwischen 40 bis 80°C erwärmten Lösungsmittels (EC/PC) im Verhältnis zwischen 15 bis 45 Gew-%, vorzugsweise 28 Gew-%, bezogen auf die Trockenmischung (Dry Blend). Gesamtmassenströme (Trockenmischung +Lösungsmittelgemisch) zwischen 10 bis 1500kg/h, je nach Größe des Kneters, möglich.
c.) Aufbereiten der Masse im Kneter in einem Temperaturbereich zwischen 80 bis 150°C mit einem mechanischen Energieeintrag zwischen 50 bis 100Wh/kg bezogen auf den Gesamtmassenstrom, wobei der Polymerbinder vollständig in Lösung geht.
d.) Der Austrag der Masse erfolgt über eine mehrfach Lochdüse mit einem Lochdurchmesser zwischen je 2 bis 5mm mit anschließender Abkühlung (auf <40°C) und Messerkopfabschlag (Kopfgranulator), so dass Granulate mit einem Durchmesser von 2 bis 5mm und einer Länge zwischen 5 und 10mm entstehen.
e.) Das so hergestellte Granulat kann in Aluminium-Verbund-Folie haltbar verpackt oder direkt in einem Einschneckenförderer unter Temperaturen zwischen 80 und 150°C wieder aufgeschmolzen und über eine Breitschlitzdüse mit anschließender Walzengruppe als Nachfolge bei Temperaturen zwischen 80 und 150°C auf das jeweilige Substrat aufgetragen werden.

Variante 2: Herstellung thermoplastisches Granulat mittels Vakuummischtrockners mit Lösungsmittellanze und rotierenden Schlagmessern, bei Verwendung von PVDF als Polymerbinder und EC als einziger Bestandteil des Lösungsmittelgemisches.
a.) Mischen aller pulverförmigen Anteile der Rezeptur (Aktivmaterial -NMC- 93wt%, Leitzusatz - Timcal®SuperP und Timcal® KS4 2:3- 2,5wt% und Polymer -Kynar®HSV900- 4,5wt%) in einem Vakuum-Mischtrockner bei Temperaturen zwischen 80 und 150°C und einem Druck <10mbar zwischen 60 bis 400min, hier bevorzugt 140°C, für 120min. Danach Abkühlung des Gemisches < 65°C.
b.) Eindüsen des Lösungsmittelgemisches (EC) in einem Mengenverhältnis von 15 bis 45 Gew-% (hier bevorzugt 28 Gew-%) bezogen auf die Trockenmischung (Dry Blend) und bei einer Temperatur von 80°C ins Vakuum des Mischraumes.
c.) Abkühlung des gesamten Gemisches unter Drehung der Mischerwelle und des Messerkopfes auf eine Temperatur <40°C und Entleerung des Mischers.
d.) Das so hergestellte Granulat kann in Aluminium-Verbund-Folie haltbar verpackt oder direkt in einem Einschneckenförderer unter Temperaturen zwischen 80 und 150°C wieder aufgeschmolzen und über eine Breitschlitzdüse mit anschließender Walzengruppe als Nachfolge bei Temperaturen zwischen 80 und 150°C auf das jeweilige Substrat aufgetragen werden.

### Bevorzugte Trockenmischungen

### Anoden:

### a) Granulat mit Graphit als Aktivmaterial

I. 61,1wt% Graphit (Hitachi SMG-A1-13cNT1 42,77wt%+ Hitachi MAGD 14,664wt%), 3,9wt%PVDF (Kynar®HSV900 2,34wt% + Kynar®ADX161 1,26wt%,Lösungsmittel 35wt%(Ethylencarbonat EC). Verhältnis Binder/Lösungsmittel 1:9
II. 61,1wt% Graphit (Hitachi SMG-A1-13cNT1 42,77wt% + Hitachi MAGD 14,664wt%), 3,9wt%PVDF (Kynar®HSV900 2,34wt% + Kynar®ADX161 1,26wt%),Lösungsmittel 35wt%(Ethylencarbonat/Propylencarbonat EC/PC 3:1). Verhältnis Binder/Lösungsmittel 1:9
III. 58,88wt% Graphit (Hitachi SMG-A1-13cNT1, 1,28wt%Leitzusatz (TIMCAL SuperC65) 3,84wt%PVDF (Kynar®HSV900 2,496wt% + Kynar®ADX161 1,344wt%,Lösungsmittel 36wt%(Ethylencarbonat EC). Verhältnis Binder/Lösungsmittel 1:9,4
IV. 58,88wt% Graphit (Hitachi SMG-A1-13cNT1), 1,28wt%Leitzusatz (TIMCAL SuperC65) 3,84wt%PVDF (Kynar®HSV900 2,496wt% + Kynar®ADX161 1,344wt%,Lösungsmittel 36wt% (Ethylencarbonat/Propylencarbonat EC/PC 3:1). Verhältnis Binder/Lösungsmittel 1:9,4
V. 65,28wt% Graphit (Hitachi SMG-A1-13cNT1), 0, 51wt%Leitzusatz (ShowaDenko VGCF®) 2,21wt%PVDF (1,4365wt% Kynar®HSV900 + 0,7735wt% Kynar®ADX161),Lösungsmittel 32wt% (Ethylencarbonat EC). Verhältnis Binder/Lösungsmittel 1:14,5
VI. 65,28wt% Graphit (Hitachi SMG-A1-13cNT1), 0,51wt%Leitzusatz (ShowaDenko VGCF®) 2,21wt%PVDF (1,4365wt% Kynar®HSV900 + 0,7735wt% Kynar®ADX161),Lösungsmittel 32wt% (Ethylencarbonat/Propylencarbonat EC/PC 3:1). Verhältnis Binder/Lösungsmittel 1:14,5
   Hinweis: Graphite gibt es von diversen Herstellern. Für die Beispiele können Graphite diverser Hersteller eingesetzt werden, jedoch sollte diese in ihren physikalischen Eigenschaften sehr ähnlich sein.

### b) Granulat mit Lithium-Titanat (Li₄Ti₅O₁₂) als Aktivmaterial

I. 55,8wt% Lithium-Titanat (Südchemie LTO EXM2228), 3,lwt%Leitzusatz (TIMCAL SuperC65 2,6wt% + 0,5wt%Showa Denko VGCF®) 3,1wt%PVDF (Kynar®HSV900 2,015wt% + 1,085wt%Kynar®ADX161 0,7735wt%,Lösungsmittel 38wt% (Ethylencarbonat EC). Verhältnis Binder/Lösungsmittel 1:12,25
II. 55,8wt% Lithium-Titanat (Südchemie LTO EXM2228), 3,1wt%Leitzusatz (TIMCAL SuperC65 2,6wt% + 0,5wt%Showa Denko VGCF®) 3,1wt%PVDF (2,015wt% Kynar®HSV900 + 1,085wt%Kynar®ADX161 ,Lösungsmittel 38wt% (Ethylencarbonat EC +Propylencarbonat EC:PC 3:1). Verhältnis Binder/Lösungsmittel 1:12,25

### Kathoden:

### a) Granulat mit Lithium Eisen Phosphat (LiFePO₄) als Aktivmaterial

I. 59,8wt% Lithium Eisen Phosphat (LiFePO4)(Südchemie LFP P2)2,275wt%Leitzusatz (TIMCAL® KS6 1,775wt% + 0,5wt%Showa Denko VGCF®) 2,925wt%PVDF (1,901wt%Kynar®HSV900 + 1,024wt%Kynar®ADX161 ,Lösungsmittel 35wt% (Ethylencarbonat EC). Verhältnis Binder/Lösungsmittel 1:11,96
II. 59,8wt% Lithium Eisen Phosphat (LiFePO4)(Südchemie LFP P2)2,275wt%Leitzusatz (TIMCAL® KS6 1,775wt% + 0,5wt%Showa Denko VGCF®) 2,925wt%PVDF (1,901wt%Kynar®HSV900 + 1,024wt%Kynar®ADX161 ,Lösungsmittel 35wt% (Ethylencarbonat EC +Propylencarbonat PC, EC:PC 3:1). Verhältnis Binder/Lösungsmittel 1:11,96

### b) Granulat mit Lithium Nickel Cobald Aluminiumoxid (NCA)

I. 69,75wt% Lithium Nickel Cobald Aluminiumoxid (TODA NCA NAT-9070)1,875wt%Leitzusatz (1,375wt%TIMCAL® KS6 + 0,5wt%ShowaDenko VGCF®), 3,375 wt%PVDF (2,193wt%Kynar®HSV900 + 1,181wt%Kynar®ADX161, Lösungsmittel 25wt% (Ethylencarbonat EC). Verhältnis Binder/Lösungsmittel 1:7,4
II. 69,75wt% Lithium Nickel Cobald Aluminiumoxid (TODA NCA NAT-9070)1,875wt%Leitzusatz (1,375wt%TIMCAL® KS6 + 0,5wt%ShowaDenko VGCF®), 3,375 wt%PVDF (2,193wt%Kynar®HSV900 + 1,181wt%Kynar®ADX161, Lösungsmittel 25wt% (Ethylencarbonat EC + Propylencarbonat PC, EC:PC 3:1). Verhältnis Binder/Lösungsmittel 1:7,4

### c) Granulat mit Lithium Nickel Mangan Cobaldoxid (NMC)

I. 67,5wt% Lithium Nickel Mangan Cobaldoxid (TODA NMC NM3101), 3,75wt% Leitzusatz (0,9375wt% TIMCAL® KS6 + 2,8125wt% TIMCAL® SuperC65), 3,75wt% PVDF (2,4375wt% Kynar®HSV900 + 1,3125wt%Kynar®ADX161, Lösungsmittel 25wt% (Ethylencarbonat EC). Verhältnis Binder/Lösungsmittel 1:6,66
II. 67,5wt% Lithium Nickel Mangan Cobaldoxid (TODA NMC NM3101), 3,75wt% Leitzusatz (0,9375wt% TIMCAL® KS6 + 2,8125wt% TIMCAL® SuperC65), 3,75wt% PVDF (2,4375wt% Kynar®HSV900 + 1,3125wt%Kynar®ADX161, Lösungsmittel 25wt% (Ethylencarbonat EC + Propylencarbonat PC, EC:PC 3:1). Verhältnis Binder/Lösungsmittel 1:6,66
III. 7 1,61wt% Lithium Nickel Mangan Cobaldoxid (TODA NMC NM3101), 2,31wt%Leitzusatz(1,81wt%TIMCAL® KS6 + 0,5wt%ShowaDenko VGCF®), 3,08wt%PVDF (2,002wt% Kynar®HSV900 + 1,078wt% Kynar®ADX161, Lösungsmittel 23wt% (Ethylencarbonat EC). Verhältnis Binder/Lösungsmittel 1:7,47
IV. 71,61wt% Lithium Nickel Mangan Cobaldoxid (TODA NMC NM3101), 2,31wt%Leitzusatz(1,81wt%TIMCAL® KS6 + 0,5wt%ShowaDenko VGCF®), 3,08wt%PVDF (2,002wt% Kynar®HSV900 + 1,078wt% Kynar®ADX161, Lösungsmittel 23wt% (Ethylencarbonat EC + Propylencarbonat PC, EC:PC 3:1). Verhältnis Binder/Lösungsmittel 1:7,47
Hinweis: Bei den Aktivmaterialien für die Kathoden gibt es diversen Herstellern. Für die Beispiele können Aktivmaterialien diverser Hersteller eingesetzt werden, jedoch sollte diese in ihren physikalischen Eigenschaften sehr ähnlich sein.

### Herstellung der Elektroden

Herstellung der Kathoden und Anodenbeschichtung indirekt und direkt

### 1. Indirekte Beschichtung

Das erhaltende Granulat wird mittels eines Einschneckenextruders wieder aufgeschmolzen und über eine beheizte Walzeneinheit zwischen zwei Trägerfolien (aus PET, PEEK, Kapton oder ähnliches) ausgeformt. (Parameter: Massenstrom, Walzenspalt, Temperatur und Abzugsgeschwindigkeit). Dieses Laminat wird im folgenden Schritt mittels eines Laminators auf die jeweilige Ableiterfolie (Kupfer 9-12µm dick für Anode oder Aluminium 10-15 µm dick für Kathode) aufgebracht. Dieses geschieht in einem Schritt für die Vorder- und Rückseite der jeweiligen Ableiterfolie. Nach der Laminationseinheit erfolgt ein Prägeschritt, bei dem mittels eines strukturierten Walzenpaars quer zur Laufrichtungen Rillen in die noch plastische Masse eingeprägt werden. Anschließend erfolgt eine Abkühlung der Folie um die Träger bzw. Deckfolie aus PET oder ähnlichem zu entfernen. Anschließend wird die beschichtete Folie mittels IR-Strahlung erhitzt, und im Luftgegenstromverfahren wird bei Temperaturen zwischen 100 und 200°C das Lösungsmittel entfernt. Danach ist die Folie für die weitere Verarbeitung (Kalandrieren) bereit. Es können so Flächenkapazitäten zwischen 1,0 und 3,5 mAh/cm² aufgetragen werden.
Das Lösungsmittel kann je nach Art (z.B. bei Verwendung von EC, PC) wieder in den Kreislauf zurückgeführt werden.

### 2. Direkte Beschichtung

Das Granulat wird mittels eines Einschneckenextruders wieder aufgeschmolzen und über eine beheizte Walzeneinheit zwischen der jeweiligen Ableiterfolie (Kupfer oder Aluminium) und Deckfolie (aus PET, PEEK, Kapton oder ähnliches) ausgeformt. (Parameter: Massenstrom, Walzenspalt, Temperatur und Abzugsgeschwindigkeit, Drehzahl). Nach der Ausformung der Schicht erfolgt ein Prägeschritt, bei dem mittels eines strukturierten Walzenpaars quer zur Laufrichtungen Rillen in die noch plastische Masse eingeprägt werden. Anschließend erfolgt eine Abkühlung der Folie um die Träger- bzw. Deckfolie aus PET oder ähnlichen zu entfernen. Danach erfolgt der erste Ausheizschritt des Lösungsmittels durch IR-Strahlung und Luftführung im Gegenstromverfahren bei Temperaturen zwischen 100 und 200°C. Dieser Prozess wird auf der Rückseite der Alu- bzw. Kupferfolie wiederholt. Danach ist die Folie für die weitere Verarbeitung (Kalandrieren) bereit. Es können somit Flächenkapazitäten zwischen 1,0 und 3,5 mAh/cm² aufgetragen werden.
Das Lösungsmittel kann je nach Art (z.B. bei Verwendung von EC, PC) wieder in den Kreislauf zurückgeführt werden.

### 3. Verfahren ohne Deckfolie:

Die Walzeneinheit wird so gestaltet, dass die jeweiligen Walzen mit unterschiedlichen Umdrehungsgeschwindigkeiten gefahren werden können. Dadurch wird eine Friktion zwischen den Walzen und der Beschichtungsmasse erzeugt. Durch diese Friktion kann ein Anhaften der Beschichtungsmasse an der einen Walzenoberfläche verhindert werden. Dadurch kann auf den Einsatz einer Deckfolie verzichtet werden. Ein Verschleiß der Oberfläche an der Walze wird jedoch dadurch nicht ausgeschlossen.

## Patentansprüche

1. Verfahren zum Herstellen eines Beschichtungsmaterials zum Beschichten eines Elektrodenträgers eines elektrischen Energiespeichers, umfassend die Schritte:
a) Bereitstellen einer Trockenmischung, enthaltend zumindest i) Aktivmaterial, ii) einen Leitfähigkeitszusatz sowie iii) fluorhaltigen Polymerbinder, wobei der fluorhaltige Polymerbinder ausgewählt ist aus einer Gruppe umfassend Polyvinylidenfluorid (PVDF), ein Polyvinylidenfluorid-Copolymer (PVDF-Copolymer) oder eine Mischung aus PVDF und einem PVDF-Copolymer,
b) in Kontakt bringen der Trockenmischung mit einem Lösungsmittelgemisch, aufweisend zumindest 60 Gew-% Ethylencarbonat und/oder Propylencarbonat oder
60 Gew-% einer beliebigen Mischung daraus,
c) Durchmischen des Lösungsmittelgemisches und der Trockenmischung bei einer Temperatur von über 80°C bis zum vollständigen Lösen des fluorhaltigen Polymerbinders in dem Lösungsmittelgemisch,
**dadurch gekennzeichnet, dass** der fluorhaltige Polymerbinder und das Lösungsmittelgemisch in einem Verhältnis von 1:(5-30) vorliegen, und dass
d) die erhaltene Mischung nach dem vollständigen Lösen des fluorhaltigen Polymerbinders auf eine Temperatur von unter 40°C gekühlt wird, wobei die erhaltene Mischung bei dem Abkühlvorgang aushärtet, und
e) die erhaltene Mischung bei dem oder nach dem Aushärtevorgang granuliert wird.

2. Verfahren zum Herstellen eines Beschichtungsmaterials zum Beschichten eines Elektrodenträgers eines elektrischen Energiespeichers nach Anspruch 1,
**dadurch gekennzeichnet, dass**
f) nach dem Granulieren dem erhaltenen Granulat bis zu 1 Gew-% MgO oder Al₂O₃ oder eine Mischung daraus zugesetzt wird.

3. Verfahren zum Herstellen eines Beschichtungsmaterials zum Beschichten eines Elektrodenträgers eines elektrischen Energiespeichers nach Anspruch 1 oder 2, **dadurch gekennzeichnet, dass** das PVDF-Copolymer ausgewählt ist aus einer Gruppe umfassend PVDF-Hexafluoropropylen (PVDF-HFP), PVDF-Tetrafluorethylen (PVDF-TFE) oder PVDF-Chlorotetrafluoroethylen (PVDF-CTFE) oder Mischungen daraus.

4. Verfahren zum Herstellen eines Beschichtungsmaterials zum Beschichten eines Elektrodenträgers eines elektrischen Energiespeichers nach einem der Ansprüche 1 - 3, **dadurch gekennzeichnet, dass** das Aktivmaterial ausgewählt ist aus einer Gruppe umfassend Graphit, amorphe Kohlenstoffe, Lithium-Speichermetalle- und/oder -legierungen, Li₄Ti₅O₁₂ (LTO), Lithiummetalloxide vom Typ LiMₓM_{y}M_{z}Oₐ (M ausgewählt aus Co, Ni, Mn, Al, V; 0≤x≤0,85, 0≤y≤0,5, 0≤z≤0,1; 1≤a≤4) oder Lithiummetallphosphate LiMPO₄ und Dotierungen der vorgenannten Lithiummetalloxide und Lithiummetallphosphate mit Magnesium und Niob, Siliziumcarbide, Magnesiumoxide, Titanoxide, Aluminiumoxide, Zirkonoxide, Calciumcarbide, sowie Füllstoffe ausgewählt aus der Gruppe umfassend NaCl, KCl, LiBF₄, LiClO₄, LiBOB, LiPF₆) mit einem Kornspektrumsbereich zwischen 0,01≤x ≤35µm oder Mischungen dieser Füllstoffe.

5. Verfahren zum Herstellen eines Beschichtungsmaterials zum Beschichten eines Elektrodenträgers eines elektrischen Energiespeichers nach einem der Ansprüche 1 - 4, **dadurch gekennzeichnet, dass** der Leitfähigkeitszusatz ausgewählt ist aus einer Gruppe umfassend Graphit mit d50 zwischen 1 µm und 8 µm, Ruße mit Primärpartikeln zwischen 10 und 80 nm und Kohlenstofffasern oder beliebige Mischungen davon.

6. Verfahren zum Herstellen eines Beschichtungsmaterials zum Beschichten eines Elektrodenträgers eines elektrischen Energiespeichers nach einem der Ansprüche 1 - 5, **dadurch gekennzeichnet, dass** die Trockenmischung 80-95 Gew-% Aktivmaterial, 1,5-5 Gew-% Leitfähigkeitszusatz und 2-8 Gew-% fluorhaltiger Polymerbinder aufweist.

7. Verfahren zum Herstellen eines Beschichtungsmaterials zum Beschichten eines Elektrodenträgers eines elektrischen Energiespeichers nach einem der Ansprüche 1 - 5, **dadurch gekennzeichnet, dass** die Trockenmischung zur Herstellung eines Beschichtungsmaterials für eine Anode vorzugsweise 94 Gew-% Aktivmaterial, 2 Gew-% Leitfähigkeitszusatz und 4 Gew-% Polymerbinder aufweist.

8. Verfahren zum Herstellen eines Beschichtungsmaterials zum Beschichten eines Elektrodenträgers eines elektrischen Energiespeichers nach einem der Ansprüche 1 - 5, **dadurch gekennzeichnet, dass** die Trockenmischung zur Herstellung eines Beschichtungsmaterials für eine Kathode vorzugsweise 93 Gew-% Aktivmaterial, 3 Gew-% Leitfähigkeitszusatz und 4 Gew-% Polymerbinder umfasst.

9. Thermoplastisches Granulat zum Herstellen eines Beschichtungsmaterials eines Elektrodenträgers eines elektrischen Energiespeichers, umfassend zumindest i) Aktivmaterial, ii) einen Leitfähigkeitszusatz, iii) fluorhaltigen Polymerbinder, wobei der fluorhaltige Polymerbinder ausgewählt ist aus einer Gruppe umfassend Polyvinylidenfluorid (PVDF), ein Polyvinylidenfluorid-Copolymer (PVDF-Copolymer) oder eine beliebige Mischung aus PVDF und/oder zumindest einem PVDF-Copolymer, und iv) ein Lösungsmittelgemisch, wobei das Lösungsmittelgemisch zumindest 60 Gew-% Ethylencarbonat und/oder Propylencarbonat oder 60% Gew-% einer beliebigen Mischung daraus aufweist,
**dadurch gekennzeichnet,**
**dass** der fluorhaltige Polymerbinder und das Lösungsmittelgemisch in einem Gewichtsverhältnis zwischen 1:(5-30) vorliegen.

10. Thermoplastisches Granulat zum Herstellen eines Beschichtungsmaterials zum Beschichten eines Elektrodenträgers eines elektrischen Energiespeichers nach Anspruch 9, **dadurch gekennzeichnet, dass** das Aktivmaterial ausgewählt ist aus einer Gruppe umfassend Graphit, amorphe Kohlenstoffe, Lithium-Speichermetalle- und/oder -legierungen , Li₄Ti₅O₁₂ (LTO), Lithiummetalloxide vom Typ LiMₓMyM_{z}Oₐ (M ausgewählt aus Co, Ni, Mn, Al, V; 0≤x≤0,85, 0≤y≤0,5, 0≤z≤0,1; 1≤a≤4) oder Lithiummetallphosphate LiMPO₄ (z.B. LiFePO₄, LiMnFePO₄, LiCoPO₄, LiVPO₄) und Dotierungen der vorgenannten Lithiummetalloxide und Lithiummetallphosphate mit Magnesium und Niob, Siliziumcarbide, Magnesiumoxide, Titanoxide, Aluminiumoxide, Zirkonoxide, Calciumcarbide, sowie Füllstoffe ausgewählt aus der Gruppe umfassend NaCl, KCl, LiBF₄, LiClO₄, LiBOB, LiPF₆ mit einem Kornspektrumsbereich zwischen 0,01≤x ≤35µm oder Mischungen dieser Füllstoffe.

11. Thermoplastisches Granulat zum Herstellen eines Beschichtungsmaterials zum Beschichten eines Elektrodenträgers eines elektrischen Energiespeichers nach Ansprüche 9 oder 10, **dadurch gekennzeichnet, dass** der Leitfähigkeitszusatz ausgewählt ist aus einer Gruppe umfassend Graphit mit d50 zwischen 1 µm und 8 µm, Ruße mit Primärpartikeln zwischen 10 und 80 nm und Kohlenstofffasern oder beliebige Mischungen davon.

12. Thermoplastisches Granulat zum Herstellen eines Beschichtungsmaterials zum Beschichten eines Elektrodenträgers eines elektrischen Energiespeichers nach einem der Ansprüche 9 - 11, **dadurch gekennzeichnet, dass** die Trockenmischung 80-95 Gew-% Aktivmaterial, 1,5-5 Gew-% Leitfähigkeitszusatz und 2-8 Gew-% fluorhaltiger Polymerbinder aufweist.

13. Thermoplastisches Granulat zum Herstellen eines Beschichtungsmaterials zum Beschichten eines Elektrodenträgers eines elektrischen Energiespeichers nach einem der Ansprüche 9 - 11, **dadurch gekennzeichnet, dass** die Trockenmischung zur Herstellung eines Beschichtungsmaterials für eine Anode vorzugsweise 94 Gew-% Aktivmaterial, 2 Gew-% Leitfähigkeitszusatz und 4 Gew-% Polymerbinder aufweist.

14. Thermoplastisches Granulat zum Herstellen eines Beschichtungsmaterials zum Beschichten eines Elektrodenträgers eines elektrischen Energiespeichers nach einem der Ansprüche 9 - 11, **dadurch gekennzeichnet, dass** die Trockenmischung zur Herstellung eines Beschichtungsmaterials für eine Kathode vorzugsweise 93 Gew-% Aktivmaterial, 3 Gew-% Leitfähigkeitszusatz und 4 Gew-% Polymerbinder umfasst.

15. Verfahren zum Beschichten eines Elektrodenträgers eines elektrischen Energiespeichers, aufweisend die Schritte
a) Herstellen eines Beschichtungsmaterials und Erwärmen des Beschichtungsmaterials auf eine vorgegebene Beschichtungstemperatur,
b) Beschichten des Elektrodenträgers mit dem Beschichtungsmaterial,
c) Trocknen des Beschichteten Elektrodenträgers,
**dadurch gekennzeichnet**,
d) dass das Verfahren die Schritte zum Herstellen des Beschichtungsmaterials nach dem Verfahren nach einem der Ansprüche 1 - 8 umfasst.

## Claims

1. A process for the production of a coating material for coating an electrode support of an electrical energy storage device, comprising the following steps:
a) providing a dry mixture containing at least i) active material, ii) a conductivity additive, as well as iii) fluorine-containing polymer binder, wherein the fluorine-containing polymer binder is selected from a group comprising polyvinylidene fluoride (PVDF), a polyvinylidene fluoride copolymer (PVDF copolymer) or a mixture of PVDF and a PVDF copolymer,
b) bringing the dry mixture into contact with a solvent mixture comprising at least 60 % by weight of ethylene carbonate and/or propylene carbonate or 60 % by weight of any mixture thereof,
c) thoroughly mixing the solvent mixture and the dry mixture at a temperature of more than 80°C until the fluorine-containing polymer binder has dissolved completely in the solvent mixture,
**characterized in that** the ratio of the fluorine-containing polymer binder and the solvent mixture is 1: (5-30), and **in that**
d) the mixture obtained after completely dissolving the fluorine-containing polymer binder is cooled to a temperature of less than 40°C, whereupon the mixture obtained hardens during the cooling process, and
e) granulating the mixture obtained during or following the hardening procedure.

2. The process for the production of a coating material for coating an electrode support of an electrical energy storage device according to claim 1, **characterized in that**
f) after granulation, up to 1 % by weight of MgO or Al₂O₃ or a mixture thereof is added to the granulate obtained.

3. The process for the production of a coating material for coating an electrode support of an electrical energy storage device according to claim 1 or 2, **characterized in that** the PVDF copolymer is selected from a group comprising PVDF-hexafluoropropylene (PVDF-HFP), PVDF-tetrafluoroethylene (PVDF-TFE) or PVDF-chlorotetrafluoroethylene (PVDF-CTFE), or mixtures thereof.

4. The process for the production of a coating material for coating an electrode support of an electrical energy storage device according to any one of claims 1 - 3, **characterized in that** the active material is selected from a group comprising graphite, amorphous carbons, lithium storage metals and/or alloys, Li₄Ti₅O₁₂ (LTO), lithium metal oxides of the LiMₓM_{y}M_{z}Oₐ type (M selected from Co, Ni, Mn, Al, V; 0 ≤ x ≤ 0.85, 0 ≤ y ≤ 0.5, 0 ≤ z ≤ 0.1; 1 ≤ a ≤ 4) or lithium metalphosphates LiMPO₄ and said lithium metal oxides and lithium metal phosphates doped with magnesium and niobium, silicon carbides, magnesium oxides, titanium oxides, aluminium oxides, zirconium oxides, calcium carbides, as well as fillers selected from the group comprising NaCl, KCl, LiBF₄, LiClO₄, LiBOB, LiPF₆ with a grain size range of between 0.01 ≤ x ≤ 35 µm, or mixtures of said fillers.

5. The process for the production of a coating material for coating an electrode support of an electrical energy storage device according to any one of claims 1 - 4, **characterized in that** the conductivity additive is selected from a group comprising graphite with a d₅₀ of between 1 µm and 8 µm, carbon blacks with primary particles of between 10 and 80 nm and carbon fibres or any mixtures thereof.

6. The process for the production of a coating material for coating an electrode support of an electrical energy storage device according to any one of claims 1 - 5, **characterized in that** the dry mixture comprises 80-95 % by weight of active material, 1.5-5 % by weight of conductivity additive and 2-8 % by weight of fluorine-containing polymer binder.

7. The process for the production of a coating material for coating an electrode support of an electrical energy storage device according to any one of claims 1 - 5, **characterized in that** the dry mixture for the production of a coating material for an anode preferably comprises 94 % by weight of active material, 2 % by weight of conductivity additive and 4 % by weight of polymer binder.

8. The process for the production of a coating material for coating an electrode support of an electrical energy storage device according to any one of claims 1 - 5, **characterized in that** the dry mixture for the production of a coating material for a cathode preferably comprises 93 % by weight of active material, 3 % by weight of conductivity additive and 4 % by weight of polymer binder.

9. A thermoplastic granulate for the production of a coating material for coating an electrode support of an electrical energy storage device, comprising at least i) active material, ii) a conductivity additive, iii) fluorine-containing polymer binder, wherein the fluorine-containing polymer binder is selected from a group comprising polyvinylidene fluoride (PVDF), a polyvinylidene fluoride copolymer (PVDF copolymer) or any mixture of PVDF and/or at least one PVDF copolymer, and iv) a solvent mixture, wherein the solvent mixture comprises at least 60 % by weight of ethylene carbonate and/or propylene carbonate or 60 % by weight of any mixture thereof,
**characterized in that**
the weight ratio of the fluorine-containing polymer binder and the solvent mixture is between 1: (5-30).

10. A thermoplastic granulate for the production of a coating material for coating an electrode support of an electrical energy storage device according to claim 9, **characterized in that** the active material is selected from a group comprising graphite, amorphous carbons, lithium storage metals and/or alloys, Li₄Ti₅O₁₂ (LTO), lithium metal oxides of the LiMₓM_{y}M_{z}Oₐ type (M selected from Co, Ni, Mn, Al, V; 0 ≤ x ≤ 0.85, 0 ≤ y ≤ 0.5, 0 ≤ z ≤ 0.1; 1 ≤ a ≤ 4) or lithium metalphosphates LiMPO₄ (for example LiFePO₄, LiMnFePO₄, LiCoPO₄, LiVPO₄) and said lithium metal oxides and lithium metal phosphates doped with magnesium and niobium, silicon carbides, magnesium oxides, titanium oxides, aluminium oxides, zirconium oxides, calcium carbides, as well as fillers selected from the group comprising NaCl, KCl, LiBF₄, LiClO₄, LiBOB, LiPF₆ with a grain size range of between 0.01 ≤ x ≤ 35 µm, or mixtures of said fillers.

11. The thermoplastic granulate for the production of a coating material for coating an electrode support of an electrical energy storage device according to claim 9 or 10, **characterized in that** the conductivity additive is selected from a group comprising graphite with a d₅₀ between 1 µm and 8 µm, carbon black with primary particles of between 10 and 80 nm and carbon fibres, or any mixtures thereof.

12. The thermoplastic granulate for the production of a coating material for coating an electrode support of an electrical energy storage device according to any one of claims 9 - 11, **characterized in that** the dry mixture comprises 80-95 % by weight of active material, 1.5-5 % by weight of conductivity additive and 2-8 % by weight of fluorine-containing polymer binder.

13. The thermoplastic granulate for the production of a coating material for coating an electrode support of an electrical energy storage device according to any one of claims 9 - 11, **characterized in that** the dry mixture for the production of a coating material for an anode preferably comprises 94 % by weight of active material, 2 % by weight of conductivity additive and 4 % by weight of polymer binder.

14. The thermoplastic granulate for the production of a coating material for coating an electrode support of an electrical energy storage device according to any one of claims 9 - 11, **characterized in that** the dry mixture for the production of a coating material for a cathode preferably comprises 93 % by weight of active material, 3 % by weight of conductivity additive and 4 % by weight of polymer binder.

15. A process for coating an electrode support of an electrical energy storage device, comprising the following steps:
a) producing a coating material and heating the coating material to a predetermined coating temperature,
b) coating the electrode support with the coating material,
c) drying the coated electrode support, **characterized in that**
d) the process comprises the steps of producing the coating material in accordance with the process claimed in one of claims 1 - 8.

## Revendications

1. Procédé destiné à fabriquer une matière de revêtement pour revêtir un porte-électrode d'un accumulateur d'énergie électrique, comprenant les étapes :
a) de la mise à disposition d'un mélange sec, contenant au moins i) de la matière active, ii) un additif de conductibilité, ainsi que iii) un liant polymère fluoré, le liant polymère fluoré étant choisi dans un groupe comprenant un polyfluorure de vinylidène (PVDF), un copolymère de polyfluorure de vinylidène (copolymère de PVDF) ou un mélange de PVDF et d'un copolymère de PVDF,
b) de la mise en contact d'un mélange sec avec un mélange de solvant comportant au moins 60 % en poids de carbonate d'éthylène et/ou de carbonate de propylène ou 60 % d'un mélange quelconque des ces derniers,
c) du malaxage du mélange de solvant et du mélange sec à une température supérieure à 80 °C pour dissoudre totalement le liant polymère fluoré dans le mélange de solvant,
**caractérisé en ce que** le liant polymère fluoré et le mélange de solvant se présentant dans un rapport de 1 : (5 à 30) et **en ce que**
d) après la dissolution totale du liant polymère fluoré, on refroidit le mélange obtenu à une température inférieure à 40 °C, le mélange obtenu se solidifiant lors du processus de refroidissement et
e) on granule le mélange obtenu pendant ou après le processus de solidification.

2. Procédé destiné à fabriquer une matière de revêtement pour revêtir un porte-électrode d'un accumulateur d'énergie électrique selon la revendication 1, caractérisé en ce
f) qu'après la granulation, on ajoute aux granulés obtenus jusqu'à 1 % en poids de MgO ou d'Al₂O₃ ou d'un mélange de ces derniers.

3. Procédé destiné à fabriquer une matière de revêtement pour revêtir un porte-électrode d'un accumulateur d'énergie électrique selon la revendication 1 ou 2, **caractérisé en ce que** le copolymère de PVDF est choisi dans un groupe comprenant l'hexafluoropropylène de PVDF (PVDF-HFP), le tétrafluoroéthylène de PVDF (PVDF-TFE) ou le chlorotétrafluoroéthylène de PVDF (PVDF-CTFE) ou des mélanges de ces derniers.

4. Procédé destiné à fabriquer une matière de revêtement pour revêtir un porte-électrode d'un accumulateur d'énergie électrique selon l'une quelconque des revendications 1 - 3, **caractérisé en ce que** la matière active est choisie dans un groupe comprenant le graphite, les carbones amorphes, les métaux accumulateurs de lithium et/ou leurs alliages, le Li₄Ti₅O₁₂ (LTO), les oxydes métalliques de lithium de type LiMₓM_{y}M_{z}Oₐ (M choisi parmi le Co, le Ni, le Mn, l'Al, le V ; 0 ≤ x ≤ 0, 85, 0 ≤ y ≤ 0, 5, 0 ≤ z ≤ 0, 1 ; 1 ≤ a ≤ 4) ou des phosphates métalliques de lithium LiMPO₄ et des dopages des oxydes métalliques et des phosphates métalliques de lithium précédemment cités avec du magnésium et du Niob, des carbures de silicium, des oxydes de magnésium, des oxydes de titane, des oxydes d'aluminium, des oxydes de zirconium, des carbures de calcium, ainsi que des agents de charge choisi dans le groupe comprenant le NaCl, le KC1, le LiBF₄, le LiClO₄, le LiBOB, le LiPF₆) dans un spectre granulométrique de l'ordre compris entre 0,01 ≤ x ≤ 35 µm ou des mélanges desdits agents de charge.

5. Procédé destiné à fabriquer une matière de revêtement pour revêtir un porte-électrode d'un accumulateur d'énergie électrique selon l'une quelconque des revendications 1 - 4, **caractérisé en ce que** l'additif de conductibilité est choisi dans un groupe comprenant le graphite, avec d50 compris entre 1 µm et 8 µm, du noir de carbone avec des particules primaires entre 10 et 80 nm et des fibres de carbone ou des mélanges quelconques de ceux-ci.

6. Procédé destiné à fabriquer une matière de revêtement pour revêtir un porte-électrode d'un accumulateur d'énergie électrique selon l'une quelconque des revendications 1 - 5, **caractérisé en ce que** le mélange sec comporte de 80 à 95 % en poids de matière active, de 1,5 à 5 % en poids d'additif de conductibilité et de 2 à 8 % en poids de liant polymère fluoré.

7. Procédé destiné à fabriquer une matière de revêtement pour revêtir un porte-électrode d'un accumulateur d'énergie électrique selon l'une quelconque des revendications 1 - 5, **caractérisé en ce que** le mélange sec destiné à fabriquer une matière de revêtement d'une anode comporte de préférence 94 % en poids de matière active, 2 % en poids d'additif de conductibilité et 4 % en poids de liant polymère.

8. Procédé destiné à fabriquer une matière de revêtement pour revêtir un porte-électrode d'un accumulateur d'énergie électrique selon l'une quelconque des revendications 1 - 5, **caractérisé en ce que** le mélange sec destiné à fabriquer une matière de revêtement d'une cathode comporte de préférence 93 % en poids de matière active, 3 % en poids d'additif de conductibilité et 4 % en poids de liant polymère.

9. Granulés thermoplastiques destinés à fabriquer une matière de revêtement pour revêtir un porte-électrode d'un accumulateur d'énergie électrique comprenant au moins de la matière active, ii) un additif de conductibilité, ainsi que iii) un liant polymère fluoré, le liant polymère fluoré étant choisi dans un groupe comprenant un polyfluorure de vinylidène (PVDF), un copolymère de polyfluorure de vinylidène (copolymère de PVDF) ou un mélange de PVDF et d'un copolymère de PVDF et iv) un mélange de solvant comportant au moins 60 % en poids de carbonate d'éthylène et/ou de carbonate de propylène ou 60 % d'un mélange quelconque des ces derniers,
**caractérisé en ce que**
le liant polymère fluoré et le mélange de solvant se présentent dans un rapport de poids compris entre 1 : (5 à 30).

10. Granulés thermoplastiques destinés à fabriquer une matière de revêtement pour revêtir un porte-électrode d'un accumulateur d'énergie électrique selon la revendication 9, **caractérisés en ce que** la matière active est choisie dans un groupe comprenant le graphite, les carbones amorphes, les métaux accumulateurs de lithium et/ou leurs alliages, le Li₄Ti₅O₁₂ (LTO), les oxydes métalliques de lithium de type LiMₓM_{y}M_{z}Oₐ (M choisi parmi le Co, le Ni, le Mn, l'Al, le V ; 0 ≤ x ≤ 0, 85, 0 ≤ y ≤ 0, 5, 0 ≤ z ≤ 0,1 ; 1 ≤ a ≤ 4) ou des phosphates métalliques de lithium LiMPO₄ et des dopages des oxydes métalliques et des phosphates métalliques de lithium précédemment cités avec du magnésium et du Niob, des carbures de silicium, des oxydes de magnésium, des oxydes de titane, des oxydes d'aluminium, des oxydes de zirconium, des carbures de calcium, ainsi que des agents de charge choisi dans le groupe comprenant le NaCl, le KC1, le LiBF₄, le LiClO₄, le LiBOB, le LiPF₆) dans un spectre granulométrique de l'ordre compris entre 0,01 ≤ x ≤ 35 µm ou des mélanges desdits agents de charge.

11. Granulés thermoplastiques destinés à fabriquer une matière de revêtement pour revêtir un porte-électrode d'un accumulateur d'énergie électrique selon la revendication 9 ou 10, **caractérisés en ce que** l'additif de conductibilité est choisi dans un groupe comprenant le graphite, avec d50 compris entre 1 µm et 8 µm, du noir de carbone avec des particules primaires entre 10 et 80 nm et des fibres de carbone ou des mélanges quelconques de ceux-ci.

12. Granulés thermoplastiques destinés à fabriquer une matière de revêtement pour revêtir un porte-électrode d'un accumulateur d'énergie électrique selon l'une quelconque des revendications 9 - 11, **caractérisés en ce que** le mélange sec comporte de 80 à 95 % en poids de matière active, de 1,5 à 5 % en poids d'additif de conductibilité et de 2 à 8 % en poids de liant polymère fluoré.

13. Granulés thermoplastiques destinés à fabriquer une matière de revêtement pour revêtir un porte-électrode d'un accumulateur d'énergie électrique selon l'une quelconque des revendications 9 - 11, **caractérisés en ce que** le mélange sec destiné à fabriquer une matière de revêtement d'une anode comporte de préférence 94 % en poids de matière active, 2 % en poids d'additif de conductibilité et 4 % en poids de liant polymère.

14. Granulés thermoplastiques destinés à fabriquer une matière de revêtement pour revêtir un porte-électrode d'un accumulateur d'énergie électrique selon l'une quelconque des revendications 9 - 11, **caractérisés en ce que** le mélange sec destiné à fabriquer une matière de revêtement d'une cathode comporte de préférence 93 % en poids de matière active, 3 % en poids d'additif de conductibilité et 4 % en poids de liant polymère.

15. Procédé destiné à revêtir un porte-électrode d'un accumulateur d'énergie électrique, comportant les étapes :
a) de la fabrication d'une matière de revêtement et de l'échauffement de la matière de revêtement à une température de revêtement prédéfinie,
b) du revêtement du porte-électrode avec la matière de revêtement,
c) du séchage du porte-électrode revêtu,
**caractérisé en ce que**
d) le procédé comprend les étapes de fabrication de la matière de revêtement d'après le procédé selon l'une quelconque des revendications 1 - 8.
